# EUROPEAN PATENT APPLICATION

(11) **EP 4 503 289 A1**
(43) Date of publication of application: **05.02.2025**
(21) Application number: 22934267.0
(22) Date of filing: 31.03.2022
(51) Int. Cl.: H01M 50/287

(54) **BATTERY MODULE AND ELECTRIC DEVICE**

(71) Applicant: Ningde Amperex Technology Limited, Ningde, Fujian 352100 (CN)
(72) Inventor: JIN, Chenfei, Ningde, Fujian 352100 (CN); TANG, Haoming, Ningde, Fujian 352100 (CN); LEI, Yu, Ningde, Fujian 352100 (CN)
(74) Representative: Icosa
(86) International application number: PCT/CN2022/084644
(87) International publication number: WO 2023/184430

(57) **Abstract**

This application discloses a battery module and an electrical device. The battery module includes a first housing, a second housing, a battery pack, and a circuit board. The first housing and the second housing are arranged along a first direction. The first housing includes a first recessed portion. The battery pack is disposed in the first recessed portion. In a first direction, the second housing includes a second recessed portion opposite to the first recessed portion. The second housing is connected to the first housing. The circuit board is disposed in the second recessed portion and is electrically connected to the battery pack. The circuit board is disposed in the second recessed portion of the second housing, all the peripheral walls of the second recessed portion can exchange heat with the circuit board, thereby increasing a heat exchange area between the circuit board and the second housing, shortening a heat conduction path between the circuit board and the second housing, improving heat dissipation efficiency of the circuit board, and improving the operating performance of the circuit board.

## Description

### TECHNICAL FIELD

This application relates to the field of batteries, and in particular, to a battery module and an electrical device.

### BACKGROUND

A rechargeable battery is a battery that is reusable after the active material is activated by charging the battery that is discharged. Rechargeable batteries are widely used in electronic devices such as mobile phones and laptop computers.

A battery module typically includes a plurality of batteries to meet the voltage requirement of electronic devices. The battery releases heat during operation. How to improve the heat dissipation of the battery module and improve the charging and discharging performance of the battery module has always been a research topic in the industry.

### SUMMARY

This application provides a battery module and an electrical device to improve heat dissipation of the battery module and improve the charging and discharging performance of the battery module.

According to a first aspect, this application provides a battery module. The battery module includes a first housing, a second housing, a battery pack, and a circuit board. The first housing and the second housing are arranged along a first direction. The first housing includes a first recessed portion. The battery pack is disposed in the first recessed portion. In a first direction, the second housing includes a second recessed portion opposite to the first recessed portion. The second housing is connected to the first housing. The circuit board is disposed in the second recessed portion and is electrically connected to the battery pack.

The circuit board is disposed in the second recessed portion of the second housing, all the peripheral walls of the second recessed portion can exchange heat with the circuit board, thereby increasing a heat exchange area between the circuit board and the second housing, shortening a heat conduction path between the circuit board and the second housing, improving heat dissipation efficiency of the circuit board, and improving the operating performance of the circuit board. The circuit board may be mounted and detached together with the second housing. During the use of the battery module, when the circuit board is faulty, the circuit board can be at least partially disconnected from the battery pack in a process of detaching the second housing, thereby simplifying the process of detaching the circuit board from the battery pack. Similarly, in assembling the battery module, the circuit board can be connected to the battery pack during assembling of the first housing and the second housing, thereby simplifying the process of connecting the circuit board to the battery pack. This embodiment of this application can simplify the mounting and detachment process of the circuit board, save time for maintaining the battery module, and reduce cost.

In some embodiments, the circuit board includes a first surface on a side facing away from the battery pack in the first direction, and a second surface opposite to the first surface. The second surface facing towards the battery pack.

In some embodiments, a first module is disposed on the first surface of the circuit board. The first module is electrically connected to the battery pack and is configured to regulate an output power of the battery pack. The first module can connect the battery pack to an external charging cabinet or an external load.

In some embodiments, the first module includes a first inductor disposed on the first surface. The first inductor is configured to store energy.

In some embodiments, a control module is disposed on the first surface of the circuit board. The control module is configured to regulate the output power of the battery pack through the first module.

In some embodiments, the first module further includes a second inductor disposed on the first surface. The second inductor is configured to filter out common-mode interference at an output end of the battery module. The first inductor and the control module are arranged along a third direction, and the third direction is perpendicular to the first direction. When viewed from the first direction, on the first surface, the first inductor is located between the second inductor and the control module along the third direction, thereby meeting the loop requirements of devices and simplifying the wiring.

In some embodiments, the first module includes a capacitor disposed on the first surface. The capacitor is configured to store energy and provide output energy.

In some embodiments, the capacitor includes a first capacitor and a second capacitor. The first capacitor and the second capacitor are arranged along a third direction. The third direction is perpendicular to the first direction. When viewed from the first direction, on the first surface, the first inductor is located between the first capacitor and the second capacitor in the third direction.

In some embodiments, the first module includes a switch element disposed on the first surface. The switch element is configured to perform periodic switching. When viewed from the first direction, on the first surface, the second capacitor is located between the switch element and the control module in the third direction. The second capacitor can block the noise generated by the switch element during the switching, reduce the noise transmitted to the control module, and improve the operating environment of the control module.

In some embodiments, the first module further includes a third inductor. The third inductor may combine with the capacitor to form an inductor-capacitor (LC) filter circuit to suppress differential-mode interference generated by the switching voltage.

In some embodiments, a second module is disposed on the first surface of the circuit board. The second module is configured to acquire a signal and control charging and discharging of the battery pack.

In some embodiments, the second module includes a sampling module. The sampling module is configured to sample the battery pack.

In some embodiments, the battery module includes a first sampling piece. The first sampling piece is configured to acquire temperatures of the battery pack at a plurality of positions. The first sampling piece is connected to the sampling module.

In some embodiments, the battery pack includes a plurality of batteries. The battery module includes a second sampling piece. The second sampling piece is configured to acquire voltage of each of the batteries. The second sampling piece is connected to the sampling module.

In some embodiments, the second module includes a temperature control module. The temperature control module is configured to control working status of the battery pack based on a temperature of the battery pack.

The battery module includes a heating element. The heating element is configured to heat the battery pack. Based on the temperature signal acquired by the sampling module, the temperature control module controls the heating element to turn on or off, so that the battery pack works within a preset temperature range.

In some embodiments, the first module includes a first interface, and the second module includes a second interface. The first interface is electrically connected to an electrical component outside the battery module. The second interface is communicatively connected to a control component outside the battery module.

In some embodiments, at least a part of the first module is covered by a first layer. The first layer includes an insulation material. The first layer can insulate at least a part of the first module from other components on the circuit board, thereby reducing short-circuiting risks and safety hazards.

In some embodiments, the first layer is connected to the bottom face of the second recessed portion to improve the connection strength between the circuit board and the second housing.

In some embodiments, the first layer includes a thermal adhesive. The first layer can conduct the heat generated by the first module to the second housing, thereby dissipating the heat and improving the performance and lifespan of the first module.

In some embodiments, in the first direction, the battery module includes a first plate, t the first plate and a bottom face of the second recessed portion together clamp the circuit board. The first plate and the bottom face of the second recessed portion clamp the circuit board to improve the stability of the circuit board.

In some embodiments, the battery pack includes a plurality of batteries. The plurality of batteries are stacked and arranged along a second direction perpendicular to the first direction.

In some embodiments, the battery pack includes a plurality of battery columns. The plurality of battery columns are arranged along a third direction. The third direction is perpendicular to the first direction and the second direction. Each of the battery columns includes a plurality of batteries stacked and arranged along the second direction.

In some embodiments, the battery pack is electrically connected to the circuit board by a first conductive portion.

According to a second aspect, an embodiment of this application provides an electrical device. The electrical device includes the battery module disclosed in any one of the embodiments in the first aspect. The battery module is configured to provide electrical energy.

### BRIEF DESCRIPTION OF DRAWINGS

The following describes features, advantages, and technical effects of exemplary embodiments of this application with reference to accompanying drawings.
FIG. 1 is a three-dimensional schematic structural diagram of a battery module according to an embodiment of this application;
FIG. 2 is a schematic exploded view of the battery module shown in FIG. 1;
FIG. 3 is another schematic exploded view of the battery module shown in FIG. 1;
FIG. 4 is another three-dimensional schematic structural diagram of the battery module shown in FIG. 1, in which a second housing and a circuit board are omitted;
FIG. 5 is a schematic bottom view of a housing assembly of a battery module in a first direction according to an embodiment of this application;
FIG. 6 is a three-dimensional schematic structural diagram of a circuit board of a battery module according to an embodiment of this application;
FIG. 7 is schematic front view of the circuit board shown in FIG. 6 in a first direction;
FIG. 8 is a cross-sectional schematic view of a housing assembly of a battery module in a second direction according to an embodiment of this application;
FIG. 9 is a three-dimensional schematic structural diagram of a battery module according to another embodiment of this application, in which a first housing is omitted;
FIG. 10 is a three-dimensional schematic structural diagram of a battery module according to another embodiment of this application, in which a housing assembly is omitted;
FIG. 11 is a three-dimensional schematic structural diagram of a second housing of a battery module according to another embodiment of this application;
FIG. 12 is a schematic block diagram of a management system of battery modules according to another embodiment of this application; and
FIG 13 is a close-up view of a local part of the management system shown in FIG. 12.

List of reference numerals:
1. battery pack; 11. battery column; 111. battery; 12. first bracket; 13. second bracket;
2. circuit board; 21. first module; 211. first inductor; 212. capacitor; 2121. first capacitor; 2122. second capacitor; 213, first interface; 213a, first output end; 213b. second output end; 214. second interface; 215. connecting terminal; 216. switch element; 2161. first switch element; 2162. second switch element; 2163. third switch element; 2164. fourth switch element; 2171. resistor element; 2172. fusing element; 218. second inductor; 219. third inductor; 22. second module; 221. sampling module; 222. temperature control module; 223. control module; 224. power supply circuit; 225. communication module; 226. indicator light; 227. data storage module; 228. hardware watchdog module; 229. clock module; 229a. alarm module; 23. first through-hole; 2a. first surface; 2b. second surface; 24. thermal conductor; 251. voltage acquisition module; 252. current acquisition module; 253. control drive circuit;
3. first housing; 31. first recessed portion;
4. second housing; 41. second recessed portion; 411. bottom face; 42. protruding portion; 43. fin; 44. positioning pin; 45. first connector; 46. second connector;
5. first layer;
6. first plate; 61. second through-hole; 62. insulation piece; 63. third through-hole
7. first conductive portion; 71. busbar
8. fastener;
9. first harness;
10. insulation component; 10a. insulation body; 10b. insulating bulge;
100. housing assembly;
Z. first direction; X. second direction; Y third direction.

### DETAILED DESCRIPTION OF EMBODIMENTS

To make the objectives, technical solutions, and advantages of some embodiments of this application clearer, the following gives a clear description of the technical solutions in some embodiments of this application with reference to the drawings in some embodiments of this application. Evidently, some described embodiments are merely a part rather than all of the embodiments of this application.

The terms such as "first" and "second" used in the specification, claims, and brief description of drawings herein are intended to distinguish between different items, but are not intended to describe a specific sequence or order of precedence. In some embodiments of this application, the same reference numeral denotes the same component. For brevity, detailed descriptions of the same component are omitted in a different embodiment.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms such as "mount" and "connect" need to be understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

In some embodiments of this application, the term "parallel" includes not only absolute parallelism, but also approximate parallelism conventionally known in engineering. The term "perpendicular" or "vertical" includes not only absolute perpendicularity, but also approximate perpendicularity conventionally known in engineering. As an example, if the angle between two directions is 80° to 90°, the two directions may be deemed perpendicular; and, if the angle between two directions is 0° to 10°, the two directions may be deemed parallel.

The following describes the battery module of this application with reference to drawings.

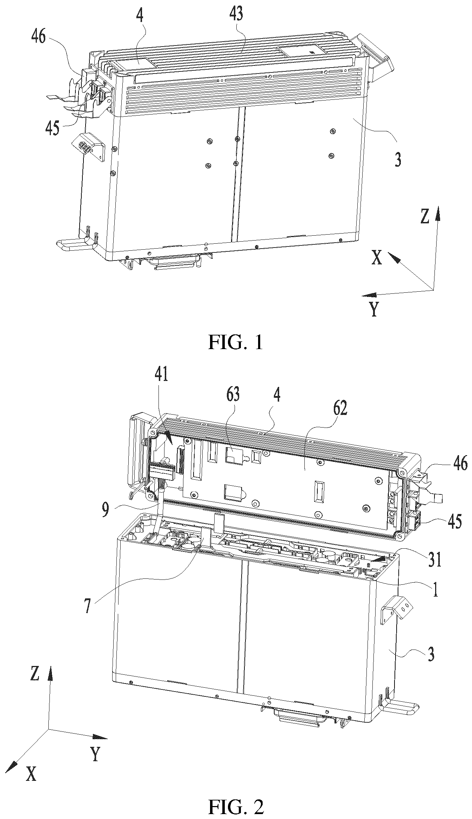

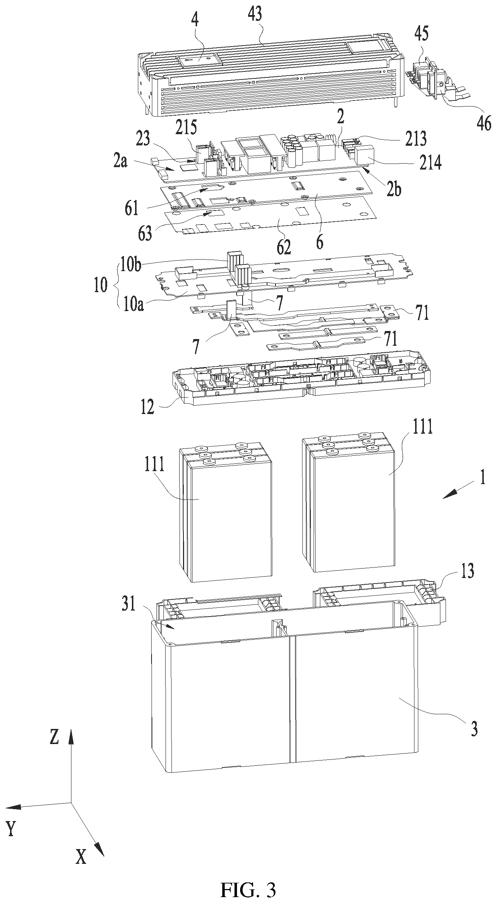

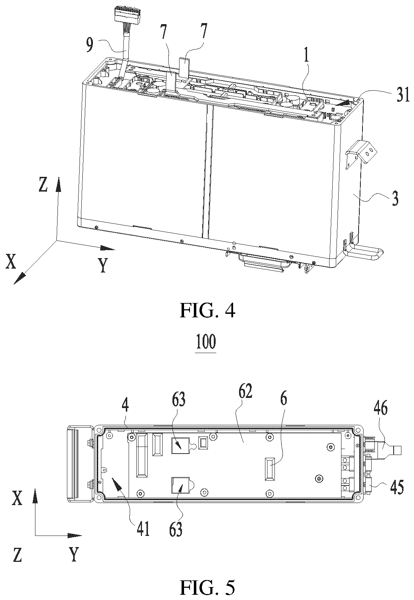

FIG. 1 is a three-dimensional schematic structural diagram of a battery module according to an embodiment of this application; FIG. 2 is a schematic exploded view of the battery module shown in FIG. 1; FIG. 3 is another schematic exploded view of the battery module shown in FIG. 1; and FIG. 4 is another three-dimensional schematic structural diagram of the battery module shown in FIG. 1, in which a second housing and a circuit board are omitted.

As shown in FIG. 1 to FIG. 4, the battery module in an embodiment of this application includes a first housing 3, a second housing 4, a battery pack 1, and a circuit board 2. The first housing 3 and the second housing 4 are disposed opposite to each other along the first direction Z. The first housing 3 includes a first recessed portion 31. The battery pack 1 is disposed in the first recessed portion 31. In the first direction Z, the second housing 4 includes a second recessed portion 41 opposite to the first recessed portion 31. The second housing 4 is connected to the first housing 3. The circuit board 2 is disposed in the second recessed portion 41 and is electrically connected to the battery pack 1.

In some embodiments, the circuit board 2 is disposed in the second recessed portion 41 of the second housing 4. All the peripheral walls of the second recessed portion 41 can exchange heat with the circuit board 2, thereby increasing a heat exchange area between the circuit board 2 and the second housing 4, shortening a heat conduction path between the circuit board 2 and the second housing 4, improving heat dissipation efficiency of the circuit board 2, and improving the operating performance of the circuit board 2. The circuit board 2 may be mounted and detached together with the second housing 4. During the use of the battery module, when the circuit board 2 is faulty, the circuit board 2 can be at least partially disconnected from the battery pack 1 in a process of detaching the second housing 4, thereby simplifying the process of detaching the circuit board 2 from the battery pack 1. Similarly, in assembling the battery module, the circuit board 2 can be connected to the battery pack 1 during assembling of the first housing 3 and the second housing 4, thereby simplifying the process of connecting the circuit board 2 to the battery pack 1. This embodiment of this application can simplify the mounting and detachment process of the circuit board 2, save time for maintaining the battery module, and reduce cost.

The first housing 3 and the second housing 4 may be connected into a whole by bonding, fastening, or other means to cover each other and jointly define an accommodation cavity configured to accommodate the battery pack 1 and the circuit board 2. As an example, the first housing 3 and the second housing 4 are connected by a fastener.

The circuit board 2 is electrically connected to the battery pack 1 to control the charging and discharging of the battery pack 1. The circuit board 2 is fixed to the second housing 4. As an example, the circuit board 2 is fixed to the second housing 4 by a bonding layer. Optionally, the bonding layer is thermally conductive. Optionally, the bonding layer is formed by curing a thermal adhesive.

In some embodiments, the second housing 4 is made of metal. Optionally, the second housing 4 is made of heat-conducting metal. Optionally, the second housing 4 is made of aluminum alloy, copper alloy, steel, or another heat-conducting metal.

In some embodiments, the battery pack 1 is entirely accommodated in the first recessed portion 31 and fixed to the first housing 3.

In some embodiments, the first housing 3 and the second housing 4 are disposed opposite to each other along the first direction Z. The battery pack 1 includes a plurality of batteries 111. The plurality of batteries 111 are stacked and arranged along a second direction X perpendicular to the first direction Z.

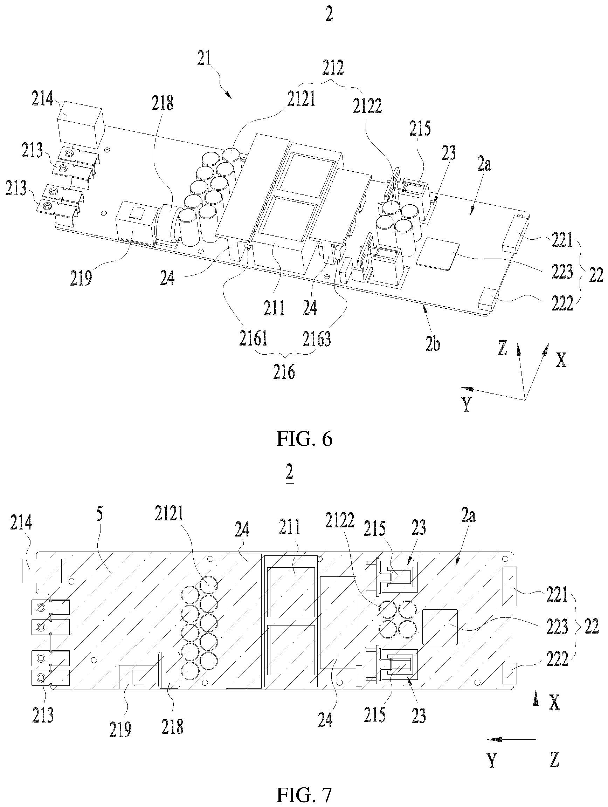

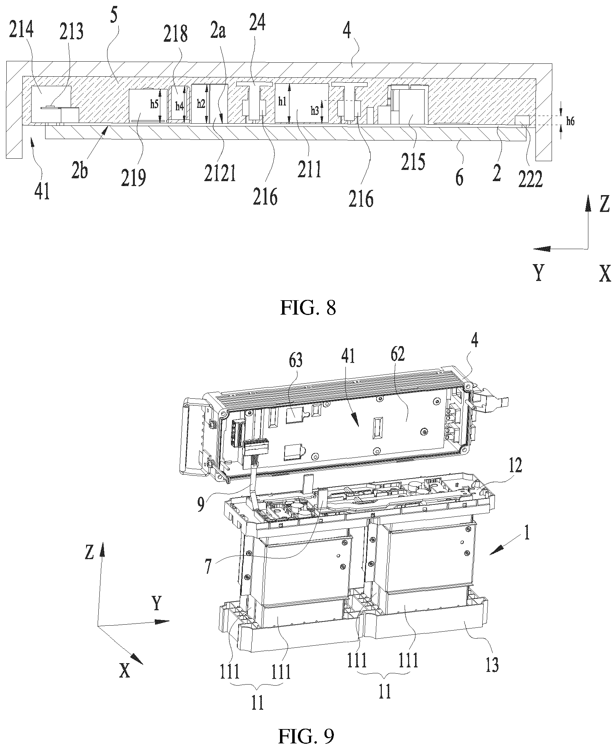

FIG. 5 is a schematic bottom view of a housing assembly of a battery module in a first direction according to an embodiment of this application; FIG. 6 is a three-dimensional schematic structural diagram of a circuit board of a battery module according to an embodiment of this application; FIG. 7 is schematic front view of the circuit board shown in FIG. 6 in a first direction; and FIG. 8 is a cross-sectional schematic view of a housing assembly of a battery module in a second direction according to an embodiment of this application. As shown in FIG. 3 to FIG. 8, in some embodiments, the circuit board 2 includes a first surface 2a on a side facing away from the battery pack 1 in the first direction Z, and a second surface 2b oriented opposite to the first surface 2a.

The first surface 2a facing towards the bottom face 411 of the second recessed portion 41, and the second surface 2b facing towards the battery pack 1.

As an example, the circuit board 2 is roughly a plate-like structure.

In some embodiments, a first module 21 is disposed on the first surface 2a of the circuit board 2. The first module 21 is electrically connected to the battery pack 1 and is capable of regulating an output power of the battery pack 1.

The first module 21 may be a charge-discharge power supply circuit module, and is capable of connecting the battery pack 1 to an external charging cabinet or an external load. The first module 21 serves a buck-boost function. As an example, the first module 21 includes a buck-boost circuit (a circuit for stepping up and down voltage) configured to regulate internal and external voltages.

In some embodiments, the first module 21 includes a first inductor 211 disposed on the first surface 2a. The first inductor 211 is capable of storing energy and stepping down voltage. As an example, the first inductor 211 may be used as a power inductor.

In some embodiments, the first module 21 includes a capacitor 212 disposed on the first surface 2a. The capacitor 212 is capable of storing energy and providing output energy. As an example, the capacitor 212 may be an energy storage capacitor. The capacitor 212 can also filter out interference and reduce loop current ripples.

In some embodiments, a plurality of capacitors 212 may be disposed. Optionally, the capacitor 212 includes a first capacitor 2121 and a second capacitor 2122.

In some embodiments, the first module 21 includes a connecting terminal 215. The connecting terminal 215 may be electrically connected to the battery pack 1 to output power of the battery pack 1.

In some embodiments, the first module 21 further includes a switch element. The switch element is capable of performing periodic switching to generate desired voltage and current. As an example, the switch element 216 may be a transistor. Optionally, the transistor may be a bipolar transistor, a field effect transistor (MOS), an insulated gate bipolar transistor (IGBT), or another type of transistor.

In some embodiments, a plurality of switch elements 216 may be disposed. In some embodiments, the switch elements 216 include a first switch element 2161, a second switch element 2162, a third switch element 2163, and a switch element 2164.

In some embodiments, the first module 21 further includes a second inductor 218. The second inductor 218 is capable of filtering out common-mode interference at a positive output end and a negative output end of the battery module to improve the electromagnetic compatibility (EMC) of the circuit.

In some embodiments, the first module 21 further includes a third inductor 219. The third inductor 219 may combine with the capacitor 212 to form an inductor-capacitor (LC) filter circuit to suppress differential-mode interference generated by the switching voltage.

In some embodiments, a second module 22 is disposed on the first surface 2a of the circuit board 2. The second module 22 is capable of acquiring a signal and controlling charging and discharging of the battery pack.

In some embodiments, the second module 22 includes a sampling module 221. The sampling module 221 is capable of sampling the battery pack 1. As an example, the sampling module 221 can acquire information such as the voltage and temperature of the battery.

In some embodiments, the battery module includes a first sampling piece. The first sampling piece is capable of acquiring temperatures of the battery pack 1 at a plurality of positions. The first sampling piece is connected to the sampling module 221. The temperature signal acquired by the first sampling piece is transmitted to the sampling module 221.

In some embodiments, the first sampling piece includes a temperature probe.

In some embodiments, the battery pack 1 includes a plurality of batteries 111 and a plurality of busbars 71. The plurality of busbars 71 connect the plurality of batteries 111 in series, parallel, or series-and-parallel pattern. The series-and-parallel pattern means a combination of series connection and parallel connection. The first sampling piece is capable of acquiring the temperature of the busbars 71.

The battery pack 1 includes a plurality of batteries 111. The battery module includes a second sampling piece. The second sampling piece is capable of acquiring voltage of each of the batteries 111. The second sampling piece is connected to the sampling module 221. The voltage signal acquired by the second sampling piece is transmitted to the sampling module 221.

In some embodiments, the second sampling piece includes a voltage sensor.

In some embodiments, the second module 22 includes a temperature control module 222. The temperature control module 222 is capable of regulating the temperature of the battery pack 1.

In some embodiments, the battery module includes a heating element. The heating element is capable of heating the battery pack 1. Based on the temperature signal acquired by the sampling module 221, the temperature control module 222 controls the heating element to turn on or off, so that the battery pack 1 works within a preset temperature range.

In some embodiments, the second module 22 further includes a control module 223. The control module 223 is capable of receiving and acquiring information or data such as temperature, voltage, and current, and issuing an instruction based on the received information, so as to implement functions such as battery charging and discharging, communication with external ECU devices, data storage, and fault alarm. As an example, the control module 223 includes a microcontroller unit (Microcontroller Unit, MCU). Optionally, the control module 223 includes a control IC.

The control module 223 can receive a signal acquired by the sampling module 221, process the signal, and feed information back to and control other structures such as a temperature control module 222.

In some embodiments, the control module 223 feeds information back to and controls the temperature control module 222 based on the temperature signal acquired by the sampling module 221. Based on the instruction of the control module 223, the temperature control module 222 controls the heating element of the battery module to turn on or off, so as to make the battery work within the preset temperature range.

In some embodiments, the first module 21 includes a first interface 213. The second module 22 includes a second interface 214. The first interface 213 may be electrically connected to an electrical component outside the battery module. The second interface 214 may be communicatively connected to a control component outside the battery module.

The first interface 213 may be used as an external power connection interface of the battery module. The electrical energy of the battery pack 1 can be output to external electrical components through the first interface 213. The second interface 214 enables signal exchange between the inside and the outside to control the battery pack 1.

In some embodiments, the battery pack 1 includes a first connector 45. The first connector 45 is disposed on the second housing 4. The first connector 45 is connected to the first interface 213. At least a part of the first connector 45 is located on outer shell of the second housing 4. The electrical component fits the first connector 45 in a pluggable manner to implement an electrical connection between the battery pack 1 and the electrical component. As an example, the first connector 45 includes a first socket. The electrical component is provided with a first plug mated to the first socket.

In some embodiments, the battery pack 1 includes a second connector 46. The first connector 45 is disposed on the second housing 4. The second connector 46 is connected to the second interface 214. At least a part of the second connector 46 is located on outer shell of the second housing 4. The control component fits the second connector 46 in a pluggable manner to control the battery pack 1. As an example, the second connector 46 includes a second socket. The control component is provided with a second plug mated to the second socket.

In some embodiments, the first inductor 211 and the control module 223 are arranged along a third direction Y. The third direction Y is perpendicular to the first direction Z. When viewed from the first direction Z, on the first surface 2a, the first inductor 211 is located between the second inductor 218 and the control module 223 along the third direction Y, thereby meeting the loop requirements of devices and simplifying the wiring.

In some embodiments, the capacitor 212 includes a first capacitor 2121 and a second capacitor 2122. When viewed from the first direction Z, on the first surface 2a, the first inductor 211 is located between the first capacitor 2121 and the second capacitor 2122 in the third direction Y.

In some embodiments, when viewed from the first direction Z, on the first surface 2a, the second capacitor 2122 is located between the switch element 216 and the control module 223 in the third direction Y. The second capacitor 2122 can block the noise generated by the switch element 216 during the switching, reduce the noise transmitted to the control module 223, and improve the operating environment of the control module 223.

In some embodiments, at least a part of the first module 21 is covered by a first layer 5. The first layer 5 includes an insulation material. Optionally, the first layer 5 includes a potting glue. Optionally, the first layer 5 includes a thermal adhesive. The thermal adhesive may be organic thermal silicone, epoxy resin AB adhesive, polyurethane adhesive, or another type of thermal silicone.

In these embodiments, the first layer 5 can insulate at least a part of the first module 21 from other components on the circuit board 2, thereby reducing short-circuiting risks and safety hazards.

In some embodiments, the circuit board 2 is connected to the second housing 4 through the first layer 5. Optionally, the first layer 5 is connected to the first surface 2a of the circuit board 2 as well as the sidewall and the bottom wall of the second recessed portion 41.

In some embodiments, the first layer 5 covers the first inductor 211, the capacitor 212, the first interface 213, the second interface 214, the connecting terminal 215, the switch element 216, the second inductor 218, and the third inductor 219. In these embodiments, the term "covering" means partially covering or fully covering.

In some embodiments, the first layer 5 covers at least a part of the second module 22 to insulate at least a part of the second module 22 from other components on the circuit board 2.

In some embodiments, the first layer 5 covers the sampling module 221, the temperature control module 222, and the control module 223.

In some embodiments, the first layer 5 is connected to the bottom face 411 of the second recessed portion 41. In these embodiments, the first layer 5 can connect the first module 21 to the bottom face 411 of the second recessed portion 41 to improve the connection strength between the circuit board 2 and the second housing 4.

In some embodiments, the first layer 5 is made of an insulating thermal material.

The first layer 5 can conduct the heat generated by the first module 21 to the second housing 4, thereby dissipating the heat and improving the performance and lifespan of the first module 21.

In some embodiments, the first layer 5 is formed by curing a thermal adhesive.

In some embodiments, a thermal conductor 24 is disposed on the first surface 2a of the circuit board 2. The thermal conductor 24 may directly abut the bottom face 411 of the second recessed portion 41, or may be connected to the bottom face through the first layer 5. The thermal conductor 24 can conduct the heat generated by the circuit board 2 to the second housing 4.

In some embodiments, the thermal conductor 24 is made of aluminum.

In some embodiments, the thermal conductor 24 is disposed on both sides of the first inductor 211.

In some embodiments, the switch element 216 is mounted on the thermal conductor 24. The heat generated by the switch element 216 can be conducted to the second housing 4 through the thermal conductor 24.

In some embodiments, in the first direction Z, the height by which the first inductor 211 protrudes beyond the circuit board 2 is greater than the height by which the sampling module 221 protrudes beyond the circuit board 2. The heat generated by the first inductor 211 is higher than the heat generated by the sampling module 221. By increasing the height of the first inductor 211, these embodiments can reduce the distance between the first inductor 211 and the bottom face 411 of the second recessed portion 41, shorten the heat conduction path between the first inductor 211 and the second housing 4, and save the thermal adhesive.

In some embodiments, in the first direction Z, the height of the capacitor 212, the height of the first interface 213, the height of the second interface 214, the height of the second inductor 218, and the height of the third inductor 219 are all greater than the height of the sampling module 221.

In some embodiments, in the first direction Z, the height h1 by which the first inductor 211 protrudes beyond the circuit board 2 is greater than the height h6 by which the temperature control module 222 protrudes beyond the circuit board 2. The first inductor 211 can store energy and provide output energy during the charging and discharging. The current flowing through the first inductor 211 is relatively large. The amount of heat generated by the first inductor 211 is relatively large. The relatively large height h1 of the first inductor 211 can reduce the distance between the first inductor 211 and the bottom wall of the second recessed portion 41, so as to increase the heat exchange rate between the first inductor 211 and the bottom wall of the second recessed portion 41, and improve the heat dissipation of the first inductor 211. The current flowing through the temperature control module 222 is relatively small, and the amount of heat generated by the temperature control module 222 is relatively small. The relatively small height h6 of the temperature control module 222 can increase the distance between the temperature control module 222 and the bottom wall of the second recessed portion 41, and reduce the heat conducted to the temperature control module 222 through the bottom wall of the second recessed portion 41.

In some embodiments, in the first direction Z, the height h2 by which the first capacitor 2121 protrudes beyond the circuit board 2, the height h3 by which the switch element 216 protrudes beyond the circuit board 2, the height h4 by which the second inductor 218 protrudes beyond the circuit board 2, and the height h5 by which the third inductor 219 protrudes beyond the circuit board 2 are all greater than the height h6 by which the temperature control module 222 protrudes beyond the circuit board 2. During charging and discharging, the current flowing through the first capacitor 2121, the switch element 216, the second inductor 218, and the third inductor 219 is relatively large. The heat generated by such components is relatively high. The relatively large height of such components can improve the heat dissipation efficiency.

In some embodiments, in the first direction Z, the battery module includes a first plate 6, the first plate 6 and a bottom face 411 of the second recessed portion 41together clamp the circuit board 2.

In these embodiments, the first plate 6 and the bottom face 411 of the second recessed portion 41 clamp the circuit board 2 to improve the stability of the circuit board 2.

In some embodiments, the second housing 4 includes a protruding portion 42 that protrudes beyond the bottom face 411 of the second recessed portion 41. The protruding portion 42 abuts against the first surface 2a. The protruding portion 42 and the first plate 6 clamp the circuit board 2 from both sides, and the space between the first surface 2a and the bottom face 411 of the second recessed portion 41 can accommodate the first module 21 and the second module 22.

In some embodiments, the battery module includes a fastener 8. The fastener 8 passes through the first plate 6 and the circuit board 2, and is threadedly connected to the protruding portion 42 to fix the circuit board 2 to the second housing 4.

In some embodiments, an insulation layer is disposed on a surface, facing toward the circuit board 2, of the first plate 6 to insulate the first plate 6 from the circuit board 2.

In some embodiments, the first plate 6 is an aluminum sheet. The aluminum sheet facilitates heat dissipation of the circuit board 2.

In some embodiments, the battery pack 1 is electrically connected to the circuit board 2 by a first conductive portion 7.

The first conductive portion 7 can collect the current of the battery pack 1, and conduct the current to the first interface 213 of the first module 21.

In some embodiments, the first conductive portion 7 fits the connecting terminal 215 in a pluggable manner. The first conductive portion 7 is directly plug-in connected to the connecting terminal 215, thereby reducing the need of other fixing structures, and facilitating the mounting and detachment of the circuit board 2.

In some embodiments, the circuit board 2 is provided with a first through-hole 23, and the first plate 6 is provided with a second through-hole 61. The first through-hole 23 and the second through-hole 61 are disposed opposite to each other along the first direction Z. The first conductive portion 7 can pass through the second through-hole 61 and the first through-hole 23 so as to be plug-in connected to the connecting terminal 215.

In some embodiments, components such as the circuit board 2, the second housing 4, and the first plate 6 can be assembled together beforehand to form a housing assembly 100. The circuit board 2 and the second housing 4 form a one-piece structure to facilitate mounting and detachment.

In some embodiments, an insulation piece 62 is disposed on one side, facing away from the circuit board 2, of the first board 6. The insulation piece 62 is provided with a third through-hole 63. The third through-hole 63 is opposite to the second through-hole 61 along the first direction Z. The first conductive portion 7 passes through the third through-hole 63, the second through-hole 61, and the first through-hole 23 so as to be plug-in connected to the connecting terminal 215.

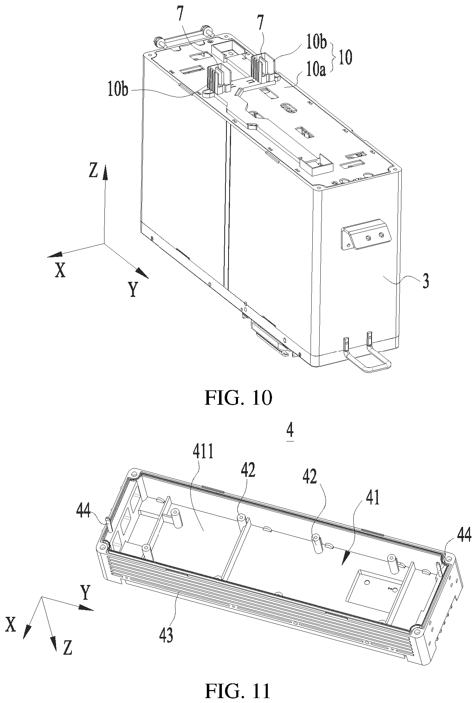

As shown in FIG. 10, in some embodiments, the battery module further includes an insulation component 10. The insulation component 10 covers at least a part of the battery pack 1. After the second housing 4 is detached, the insulation component 10 can insulate the battery pack 1 from the staff, thereby reducing the risk of the staff contacting the power circuit and improving safety.

In some embodiments, the insulation component 10 includes an insulation body 10a and an insulation bulge 10b that protrudes beyond the insulation body 10a. The first conductive portion 7 passes through the insulation body 10a. The insulation bulge 10b surrounds the first conductive portion 7 from the outside. After the second housing 4 is detached, the insulation bulge 10b can insulate the first conductive portion 7 from the staff, thereby reducing the risk of the staff contacting the power circuit.

The insulation bulge 10b may be an annular structure, a U-shaped structure, or a semicircular structure.

In some embodiments, the first conductive portion 7 passes through the insulation bulge 10b of the insulation component 10, the third through-hole 63, the second through-hole 61, and the first through-hole 23 sequentially to pass through the circuit board 2 and be plug-in connected to the connecting terminal 215.

In some embodiments, two first conductive portions 7 and two connecting terminals 215 are disposed. One of the first conductive portions 7 is connected to one connecting terminal 215 and a main positive output electrode of the battery pack. The other first conductive portion 7 is connected to the other connecting terminal 215 and a main negative output electrode of the battery pack.

In some embodiments, the battery module further includes a first harness 9. The first harness 9 may be electrically connected to the sampling module 221. The first harness 9 can connect the first sampling piece and the sampling module 221. As an example, the first sampling piece includes a temperature probe.

A battery 111 includes a battery housing, an electrode assembly, and an electrolyte solution. The electrode assembly and the electrolyte solution are accommodated in the battery housing. The electrode assembly includes a positive electrode plate, a negative electrode plate, and a separator. The battery 111 works primarily by shuttling metal ions between the positive electrode plate and the negative electrode plate.

The battery 111 may be a lithium-ion battery, a sodium-lithium-ion battery, a sodium-ion battery, a magnesium-ion battery, or another type of battery. The type of the battery is not limited herein.

The plurality of batteries 111 may be connected in series, parallel, or series-and-parallel pattern. The series-and-parallel pattern means a combination of series connection and parallel connection of the plurality of batteries 111.

The battery pack 1 further includes a first bracket 12 and a second bracket 13. The first bracket 12 is disposed at one end, close to the second housing 4, of the battery 111 and is connected to the battery 111. The second bracket 13 is disposed at one end, facing away from the second housing 4, of the battery 111 and is connected to the battery 111. The first bracket 12 and the second bracket 13 are accommodated in the first recessed portion 31 and can support and fix the battery 111.

In some embodiments, the battery pack 1 includes a plurality of battery columns 11. The plurality of battery columns 11 are arranged along a third direction Y The third direction Y is perpendicular to the first direction Z and the second direction X. Each of the battery columns 11 includes a plurality of batteries 111 stacked and arranged along the second direction X.

As shown in FIG. 11, in some embodiments, a plurality of fins 43 are disposed on the outer side of the second housing 4. The fins 43 can increase the surface area of the second housing 4, improve the heat dissipation efficiency of the second housing 4, and ensure the safety of the electronic components.

In some embodiments, the second housing 4 is provided with a positioning pin 44. The positioning pin 44 can guide insertion of the second housing 4 into the first housing 3 to implement positioning of the second housing 4 and the first housing 3, and enable accurate plug-in connection between the first conductive portion 7 and the connecting terminal 215.

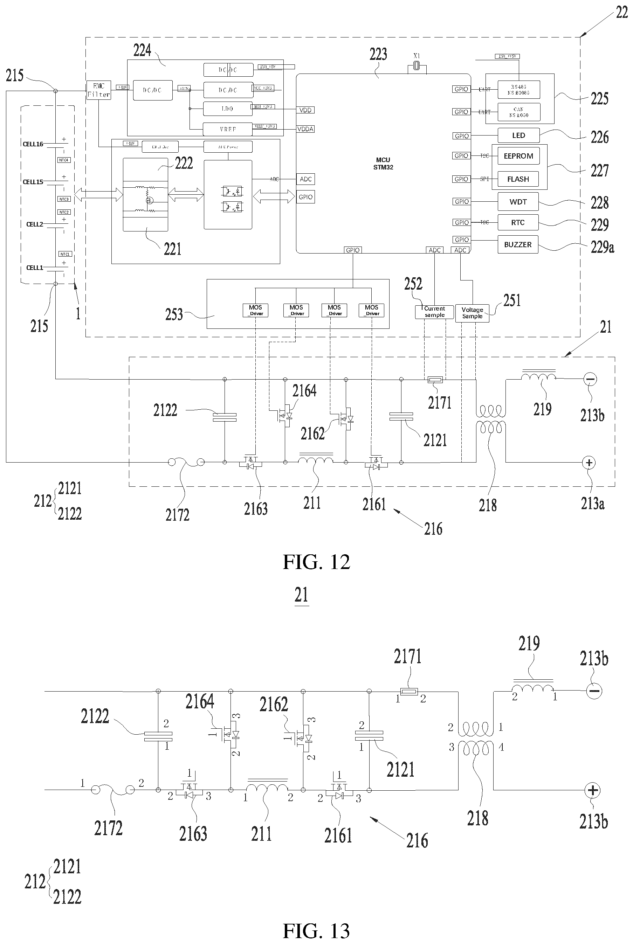

The system composition and circuit diagram of a battery module according to an embodiment of this application are described below with reference to FIG. 12. However, to the extent that the same functions are fulfilled, the system composition and circuit diagram of the battery module shown in FIG. 12 are not limited to exactly the same components as those in FIG. 12, but may be flexibly applied based on the relevant knowledge of a person skilled in the art.

As shown in FIG. 12 and FIG. 13, the battery management system is provided with a first module 21 and a second module 22. The first module 21 serves a function of regulating the output power of the battery pack 1. The second module 22 serves a function of acquiring a signal and controlling the charging and discharging of the battery pack 1. The second module 22 can control the first module 21.

The first module 21 is a charge-discharge power supply circuit module, and is capable of connecting the battery pack 1 to an external charging cabinet or an external load (such as a vacuum cleaner, a laptop computer, or an electric tool). The first module 21 serves a buck-boost function. As an example, the first module 21 includes a buck-boost circuit (a circuit for stepping up and down voltage) configured to regulate internal and external voltages. The current flowing through the first module 21 is relatively large. The heat generated by the first module 21 is higher than the heat generated by the second module 22.

The second module 22 includes a power supply circuit 224, a control module 223, a sampling module 221, and a temperature control module 222.

The power supply circuit 224 is connected to the control module 223 and the battery pack 1, so as to transmit the voltage and current of the battery pack 1 to the control module 223 as a power supply.

The sampling module 221 can acquire information about the battery, and upload the information to the control module 223. The sampling module 221 can acquire the information such as the voltage and temperature of the battery of the battery pack 1.

The control module 223 is configured to receive and acquire the information or data such as temperature, voltage, and current, and issue an instruction based on the received information, so as to implement functions such as battery charging and discharging, communication with external ECU devices, data storage, and fault alarm. For example, the control module 223 can regulate the temperature of the battery through the temperature control module 222 based on the data information uploaded by the sampling module 221. The control module 223 can also control the first module 21 to regulate the output power of the battery pack 1 through the first module 21.

As an example, the control module 223 includes a microcontroller unit (Microcontroller Unit, MCU).

The second module 22 may further include a communication module 225. The communication module 225 may be connected to the control module 223 and an external ECU device to implement communication between the control module 223 and the external ECU device. As an example, the communication module 225 may include a second connector 214.

The second module 22 may further include an indicator light 226. The indicator light 226 may serve a function of displaying the power status of the battery and the operating status of the battery management system. As an example, the indicator light 226 is an LED indicator.

The second module 22 may further include a data storage module 227. The data storage module 227 may serve a function of storing the operating data of the battery management system. Optionally, the data storage module 227 includes a memory chip. The memory chip may serve a function of storing data information.

The second module 22 further includes a hardware watchdog module 228. The hardware watchdog module 228 works together with the control module 223 to avoid software runaway.

The second module 22 may further include a clock module 229. The clock module 229 provides real-time clock data for the control module 223.

The second module 22 may further include an alarm module 229a. The alarm module 229a may serve a function of sending an alarm message when the battery management system is abnormal. As an example, the alarm module 229a includes a buzzer.

In some embodiments, the second module 22 includes a voltage acquisition module 251 and a current acquisition module 252. The voltage acquisition module serves a function of detecting the voltage output by the battery module. The current acquisition module 252 serves a function of detecting the current output by the battery module.

The second module 22 further includes a control drive circuit 253. The control drive circuit 253 may be connected to the control module 223 and the first module 21 to control a buck-boost circuit of the first module 21.

The first module 21 may include a switch element 216, a capacitor 212, a first inductor 211, a second inductor 218, and a third inductor 219.

The switch element 216 serves a function of performing periodic switching to generate desired voltage and current. The switch element 216 can make a circuit when the control drive circuit 253 outputs a valid drive signal, and break the circuit when the control drive circuit 253 cuts off the valid drive signal. As an example, the switch element 216 may be a transistor. Optionally, the transistor may be a bipolar transistor, a field effect transistor (MOS), an insulated gate bipolar transistor (IGBT), or another type of transistor.

The capacitor 212 may serve a function of filtering out interference, storing energy, and reducing loop current ripples.

The first inductor 211 may be a power inductor.

The second inductor 218 serves a function of filtering out common-mode interference at a positive output end and a negative output end of the battery module to improve the EMC of the circuit. The second inductor 218 is a common-mode inductor.

The third inductor 219 combines with the capacitor 212 to form an LC filter circuit to suppress differential-mode interference generated by the switching voltage. The third inductor 219 may be a differential-mode inductor.

The first module 21 is provided with a first output end 213a and a second output end 213b. The first output end 213a may be connected to a positive electrode of a charger or a load (such as a vacuum cleaner) through a first connector. The second output end 213b may be connected to a negative electrode of the charger or the load through the first connector. As an example, the first output end 213a and the second output end 213b may be connectors.

The first module 21 is provided with a resistor element 2171. The current acquisition module 252 can acquire the current value at the resistor element 2171.

In some embodiments, at least four switch elements 216 are disposed. The four switch elements 216 are defined as: a first switch element 2161, a second switch element 2162, a third switch element 2163, and a fourth switch element 2164, respectively. In some examples, the first switch element 2161, the second switch element 2162, the third switch element 2163, and the fourth switch element 2164 may be N-type MOS. In some other examples, the first switch element 2161, the second switch element 2162, the third switch element 2163, and the fourth switch element 2164 may be P-type MOS.

At least four capacitors 212 are disposed, of which two capacitors 212 are defined as a first capacitor 2121 and a second capacitor 2122 respectively.

In a circuit, the first end of the third inductor 219 is connected to the second output end 213b, that is, connected to the negative electrode of the charger or the load. The second end of the third inductor 219 is connected to the first end of the second inductor 218. The second end of the second inductor 218 is connected to the second end of the resistor element 2171. The third end of the second inductor 218 is connected to the first end of the first capacitor 2121 and the third end of the first switch element 2161. The fourth end of the second inductor 218 is connected to the first output end, that is, connected to the positive electrode of the charger or the load.

The third end of the first switch element 2161 is connected to the first end of the first capacitor 2121. The first end of the first switch element 2161 is connected to the output end of the control drive circuit 253. The second end of the first switch element 2161 is connected to the second end of the first inductor 211 and the second end of the second switch element 2162. The third end of the second switch element 2162 is connected to the negative output electrode of the battery pack 1. The first end of the second switch element 2162 is connected to the output end of the control drive circuit 253.

The first end of the first inductor 211 is connected to the third end of the third switch element 2163 and the second end of the fourth switch element 2164. The third end of the fourth switch element 2164 is connected to the negative output electrode of the battery pack 1. The first end of the third switch element 2163 and the first end of the fourth switch element 2164 are connected to the output end of the control drive circuit 253 separately. Each switch element is driven to turn on by an effective drive signal output by the control drive circuit 253, and is driven to turn off by cutting off the effective drive signal.

The second end of the third switch element 2163 is connected to the first end of the second capacitor 2122 and the second end of the fusing element 2172. The second end of the first capacitor 2121 and the second end of the second capacitor 2122 are both connected to the negative output electrode of the battery pack 1.

The first end of the fusing element 2172 is connected to the positive output electrode of the battery pack 1, and is connected in series in a positive output electrode loop of the battery pack 1 to implement protection against overcurrent and short-circuiting.

The first end of the resistor element 2171 is connected to the second end of the first capacitor 2121 and the negative output electrode of the battery pack 1. The current acquisition module 252 is connected to the first end and the second end of the resistor element 2171.

In the drawings, the first end, second end, third end, and fourth end involved in each component are identified by numbers 1, 2, 3 and 4, respectively, near the corresponding component.

The voltage acquisition module 251 is connected to a first output end 213a and a second output end 213b.

Assuming that the voltage between the first output end 213a and the second output end 213b is Vₚ⁺ and the voltage between the positive output electrode of the battery pack 1 and the negative output electrode of the battery pack 1 is V_{b}⁺, the battery module in an embodiment of this application works in at least the following four operating conditions.

### Circuit condition I:

When the control module 223 detects, through the voltage acquisition module 251, that Vₚ⁺ is greater than V_{b}⁺ during charging of the battery module, the first module 21 enters a buck charging mode. In this case, the control module 223 controls, through the control drive circuit 253, the third switch element 2163 to close and the fourth switch element 2164 to open, and then the first switch element 2161, the second switch element 2162, the first capacitor 2121, the second capacitor 2122, and the first inductor 211 form a synchronous buck circuit topology.

The buck power supply switches the first switch element 2161 and the second switch element 2162 at a fixed frequency, and adjusts the duty cycle to implement the function of buck constant-current charging.

In an on-off cycle, step (I) is performed before step (II). In step (I), the control drive circuit 253 controls the second switch element 2162 to open and controls the first switch element 2161 to close. The current flows from the first output end 213a through the second inductor 218, the first switch element 2161, and the first inductor 211 successively, and then flows through the third switch element 2163 and the fusing element 2172 to the positive output electrode of the battery pack 1. The first output end 213a and the second output end 213b input a voltage to the first inductor 211, the second capacitor 2122, and the battery to perform charging. At this time, the first inductor 211 and the second capacitor 2122 store energy. Subsequently, in step (II), the control drive circuit 253 controls the first switch element 2161 to open and the second switch element 2162 to close. Because the current of the first inductor 211 needs to avoid abrupt change, the current of the first inductor 211 flows from the first end 211a of the first inductor 211 through the third switch element 2163 and the fusing element 2172 to the positive output electrode of the battery pack 1. Subsequently, the current flows from the positive output electrode of the battery pack 1 to the negative output electrode of the battery pack 1, and then flows from the negative output electrode of the battery pack 1 through the second switch element 2162 to the second end 211b of the first inductor 211, thereby completing the process of discharging and freewheeling of the inductor and charging the battery.

In step (II), freewheeling and charging are maintained by relying solely on the energy stored in the first inductor 211. Therefore, the average output voltage is less than the input voltage in one cycle, so that the circuit module implements the buck charging function. Steps (I) and (II) are repeated cyclically to implement stepped-down stable voltage output.

In one switching cycle, the time in step (I) is ti, the time in step (II) is t₂, and the value of t₁/(t₁ + t₂) is a switching duty cycle D.

Assuming that the current value detected by the current acquisition module 252 is Iₚ⁺ and the system sets the charging current limit value to I_{c}⁺, during the operation of the buck circuit, when Iₚ⁺ is greater than I_{c}⁺, the duty cycle D is reduced; when Iₚ⁺ is less than I_{c}⁺, the duty cycle D is increased. When Iₚ⁺ is equal to I_{c}⁺, the duty cycle D remains unchanged. By comparing Iₚ⁺ with I_{c}⁺, the duty cycle of the output of the control drive circuit 253 is adjusted to implement the function of constant-current charging.

The switch element 216 incurs a conduction loss and a switching loss. The current of the circuit is relatively large, and the switching frequency is relatively high. The loss is accumulated during the switching. The loss is converted into heat. Therefore, the switch element 216 generates heat intensely. The first layer in the embodiment of this application can transmit the heat generated by the switch element 216 to the second housing, so as to dissipate heat for the switch element 216, and improve the performance and lifespan of the switch element 216.

### Circuit condition II:

When the control module 223 detects, through the voltage acquisition module 251, that Vₚ⁺ is less than or equal to V_{b}⁺ during charging of the battery module, the first module 21 enters a boost charging mode. In this case, the control module 223 controls, through the control drive circuit 253, the first switch element 2161 to close and the second switch element 2162 to open, and then the third switch element 2163, the fourth switch element 2164, the first capacitor 2121, the second capacitor 2122, and the first inductor 211 form a boost circuit topology.

The boost power supply switches the third switch element 2163 and the fourth switch element 2164 at a fixed frequency, and adjusts the duty cycle to implement the function of boost constant-current charging.

In an on-off cycle, step (I) is performed before step (II). In step (I), the control drive circuit 253 controls the third switch element 2163 to open and the fourth switch element 2164 to close. The current flows from the first output end 213a through the second inductor 218, the first switch element 2161, and the first inductor 211 successively, and then flows through the fourth switch element 2164 to the negative output electrode of the battery pack 1. The first output end 213a and the second output end 213b input a voltage to the first inductor 211 to perform charging. At this time, the first inductor 211 stores energy. Subsequently, in step (II), the control drive circuit 253 controls the fourth switch element 2164 to open and the third switch element 2163 to close. Because the current of the first inductor 211 needs to avoid abrupt change, the current of the first inductor 211 flows from the first end 211a of the first inductor 211 through the third switch element 2163 and then through the fusing element 2172 to the positive output electrode of the battery pack 1 to charge the battery and the second capacitor 2122. At this time, the voltage between the two ends of the second capacitor 2122 is Vₚ⁺ plus the voltage between the two ends of the first inductor 211. Therefore, the charging output voltage at this time is already higher than the input voltage, thereby implementing the function of boost charging. Steps (I) and (II) are repeated cyclically to implement stepped-up stable voltage output.

The constant-current charging function is implemented by adjusting the duty cycle D of the output of the control drive circuit 253. The implementation process is the same as that described in circuit condition I.

### Circuit condition III:

When the control module 223 detects, through the voltage acquisition module 251, that V_{b}⁺ is less than or equal to Vₚ⁺ during discharging of the battery module, the first module 21 enters a boost discharging mode. In this case, the control module 223 controls, through the control drive circuit 253, the third switch element 2163 to close and the fourth switch element 2164 to open, and then the first switch element 2161, the second switch element 2162, the first capacitor 2121, the second capacitor 2122, and the first inductor 211 form a synchronous boost circuit topology.

The boost power supply switches the first switch element 2161 and the second switch element 2162 at a fixed frequency, and adjusts the duty cycle to implement the function of boost constant-current discharging.

In an on-off cycle, step (I) is performed before step (II). In step (I), the control drive circuit 253 controls the first switch element 2161 to open and the second switch element 2162 to close. The current flows from the positive output electrode of the battery pack 1 through the fusing element 2172, the third switch element 2163, and the first inductor 211 successively, and then flows through the second switch element 2162 to the negative output electrode of the battery pack 1. The positive output electrode of the battery pack 1 and the negative output electrode of the battery pack 1 input a voltage to the first inductor 211 to perform charging. At this time, the first inductor 211 stores energy. Subsequently, in step (II), the control drive circuit 253 controls the second switch element 2162 to open and the first switch element 2161 to close. Because the current of the first inductor 211 needs to avoid abrupt change, the current of the first inductor 211 flows from the second end 211b of the first inductor 211 through the first switch element 2161 to charge the first capacitor 2121, and then flows through the second inductor 218 to the first output end 213a to charge the load. At this time, the voltage across the first output end 213a and the voltage across the second output end 213b are V_{b}⁺ plus the voltage between the two ends of the first inductor 211. Therefore, the discharging output voltage at this time is already higher than the input voltage, thereby implementing the function of boost discharging. Steps (I) and (II) are repeated cyclically to implement stepped-up stable voltage output.

The constant-current charging function is implemented by adjusting the duty cycle D of the output of the control drive circuit 253. The implementation process is the same as that described in circuit condition I.

### Circuit condition IV:

When the control module 223 detects, through the voltage acquisition module 251, that V_{b}⁺ is greater than Vₚ⁺ during discharging of the battery module, the first module 21 enters a buck discharging mode. In this case, the control module 223 controls, through the control drive circuit 253, the first switch element 2161 to close and the second switch element 2162 to open, and then the third switch element 2163, the fourth switch element 2164, the first capacitor 2121, the second capacitor 2122, and the first inductor 211 form a synchronous buck circuit topology.

The buck power supply switches the third switch element 2163 and the fourth switch element 2164 at a fixed frequency, and adjusts the duty cycle to implement the function of buck constant-current discharging.

In an on-off cycle, step (I) is performed before step (II). In step (I), the control drive circuit 253 controls the fourth switch element 2164 to open and the third switch element 2163 to close. The current flows from the positive output electrode of the battery pack 1 through the fusing element 2172, the third switch element 2163, and the first inductor 211 successively, and then flows through the first switch element 2161 and the second inductor 218 to the first output end 213a. The positive output electrode of the battery pack 1 and the negative output electrode of the battery pack 1 input a voltage to the first inductor 211 and the first capacitor 2121 to perform charging and discharge the load. At this time, the first inductor 211 and the first capacitor 2121 store energy. Subsequently, in step (II), the control drive circuit 253 controls the third switch element 2163 to open and the fourth switch element 2164 to close. Because the current of the first inductor 211 needs to avoid abrupt change, the current of the first inductor 211 flows from the second end 211b of the first inductor 211 through the first switch element 2161 to charge the first capacitor 2121, and then flows through the second inductor 218 to the first output end 213a to power the load. Subsequently, the current flows back to the second output end 213b, flows through the third inductor 219, the second inductor 218, and the resistor element 2171 successively. Afterward, the current flows back to the first end 211a of the first inductor 211 through the fourth switch element 2164, thereby completing the process of discharging and freewheeling of the inductor and discharging the load. In step (II), the freewheeling and discharging of the inductor are maintained by relying on the energy stored in the inductor. Therefore, the average output voltage is less than the input voltage in one cycle, so that the circuit module implements the buck discharging function. Steps (I) and (II) are repeated cyclically to implement stepped-down stable voltage output.

The constant-current charging function is implemented by adjusting the duty cycle D of the output of the control drive circuit 253. The implementation process is the same as that described in circuit condition I.

some embodiments of this application further provide an electrical device. The electrical device includes the battery module disclosed in any one of the above embodiments. The battery module is configured to provide electrical energy.

The electrical device may be a mobile phone, a portable device, a laptop computer, an electric toy, an electric tool, a micro base station, or the like. The electric tool may be a metal cutting electric tool, a cleaning tool, or the like, such as an electric drill, an electric wrench, a vacuum cleaner, or a robot cleaner. The electrical device is not particularly limited in some embodiments of this application.

Although this application has been described with reference to exemplary embodiments, various improvements may be made to some embodiments without departing from the scope of this application, and the components of this application may be replaced with equivalents. Particularly, to the extent that no structural conflict exists, various technical features mentioned in various embodiments may be combined in any manner. This application is not limited to some specific embodiments disclosed herein, but includes all technical solutions falling within the scope of the claims.

## Claims

1. A battery module, comprising: a first housing, a second housing, a battery pack, and a circuit board; wherein the first housing and the second housing are arranged along a first direction;
the first housing comprises a first recessed portion;
the battery pack is disposed in the first recessed portion;
in a first direction, the second housing comprises a second recessed portion opposite to the first recessed portion, and the second housing is connected to the first housing; and
the circuit board is disposed in the second recessed portion and is electrically connected to the battery pack.

2. The battery module according to claim 1, wherein the circuit board comprises a first surface on a side facing away from the battery pack in the first direction, and a second surface opposite to the first surface.

3. The battery module according to claim 2, wherein a first module is disposed on the first surface of the circuit board, and the first module is electrically connected to the battery pack and is configured to regulate an output power of the battery pack.

4. The battery module according to claim 3, wherein the first module comprises a first inductor disposed on the first surface, and the first inductor is configured to store energy.

5. The battery module according to claim 3, wherein a control module is disposed on the first surface of the circuit board, and the control module is configured to regulate the output power of the battery pack through the first module.

6. The battery module according to claim 5, wherein the first module further comprises a second inductor disposed on the first surface, and the second inductor is configured to filter out common-mode interference at an output end of the battery module;
the first inductor and the control module are arranged along a third direction, and the third direction is perpendicular to the first direction; and
when viewed from the first direction, on the first surface, the first inductor is located between the second inductor and the control module along the third direction.

7. The battery module according to claim 5, wherein the first module comprises a capacitor disposed on the first surface, and the capacitor is configured to store energy and provide output energy.

8. The battery module according to claim 7, wherein the capacitor comprises a first capacitor and a second capacitor;
the first capacitor and the second capacitor are arranged along a third direction, and the third direction is perpendicular to the first direction; and
when viewed from the first direction, on the first surface, the first inductor is located between the first capacitor and the second capacitor in the third direction.

9. The battery module according to claim 8, wherein the first module comprises a switch element disposed on the first surface, and the switch element is configured to perform periodic switching; and
when viewed from the first direction, on the first surface, the second capacitor is located between the switch element and the control module in the third direction.

10. The battery module according to claim 2, wherein a second module is disposed on the first surface of the circuit board, and the second module is configured to acquire a signal and control charging and discharging of the battery pack.

11. The battery module according to claim 10, wherein the second module comprises a sampling module, and the sampling module is configured to sample the battery pack.

12. The battery module according to claim 11, comprising a first sampling piece, wherein the first sampling piece is configured to acquire temperatures of the battery pack at a plurality of positions, and the first sampling piece is connected to the sampling module.

13. The battery module according to claim 11, wherein the battery pack comprises a plurality of batteries, the battery module comprises a second sampling piece, the second sampling piece is configured to acquire voltage of each of the plurality of batteries, and the second sampling piece is connected to the sampling module.

14. The battery module according to claim 10, wherein the second module comprises a temperature control module, and the temperature control module is configured to control working status of the battery pack based on a temperature of the battery pack.

15. The battery module according to claim 3, wherein the first module comprises a first interface, the second module comprises a second interface, the first interface is electrically connected to an electrical component outside the battery module, and the second interface is communicatively connected to a control component outside the battery module

16. The battery module according to claim 3, wherein at least a part of the first module is covered by a first layer, and the first layer comprises an insulation material.

17. The battery module according to claim 16, wherein the first layer is connected to a bottom face of the second recessed portion.

18. The battery module according to claim 16, wherein the first layer comprises a thermal adhesive.

19. The battery module according to claim 3, wherein in the first direction, the battery module comprises a first plate; the first plate and a bottom face of the second recessed portion together clamp the circuit board.

20. The battery module according to claim 1, wherein the battery pack comprises a plurality of batteries, and the plurality of batteries are stacked and arranged along a second direction perpendicular to the first direction.

21. The battery module according to claim 20, wherein the battery pack comprises a plurality of battery columns, the plurality of battery columns are arranged along a third direction, the third direction is perpendicular to the first direction and the second direction, and each of the battery columns comprises a plurality of batteries stacked and arranged along the second direction.

22. The battery module according to claim 1, wherein the battery pack is electrically connected to the circuit board by a first conductive portion.

23. An electrical device, comprising the battery module according to any one of claims 1 to 22, wherein the battery module is configured to provide electrical energy.
